# EUROPÄISCHE PATENTANMELDUNG

(11) **EP 0 527 484 A1**
(43) Veröffentlichungstag der Anmeldung: **17.02.1993**
(21) Anmeldenummer: 92113755.0
(22) Anmeldetag: 12.08.1992
(51) Int. Cl.: B32B 3/12, B32B 3/30, E04C 2/40, E04C 2/32

(54) **Leichtbau-Flächenelement und Verfahren zur Herstellung eines solchen**

(30) Priorität: 13.08.1991 DE 4126781
(71) Anmelder: EURO-COMPOSITES S.A., L-6401 Echternach (LU)
(72) Erfinder: Menei, Leonardo, L-6186 Gonderange (LU)
(74) Vertreter: Bohnenberger, Johannes, Dr.

(57) **Zusammenfassung**

Bei einem Leichtbau-Flächenelement ist mindestens eine Kernschicht (10) vorgesehen, die auf beiden Oberflächen mit einer dünneren äußeren Schicht (15, 16) verbunden ist. Es wird vorgeschlagen, eine Vielzahl von zueinander parallelen Schlitzen (17) definierter Breite vorzusehen, welche ausgehend von einer intakten äußeren Schicht (16) die Kernschicht (10) zu einem wesentlichen Teil ihrer Dicke durchqueren, um so eine leichte Verformbarkeit des Flächenelements in einer Richtung zu erzielen.

## Beschreibung

Die Erfindung betrifft ein Leichtbau-Flächenelement nach dem Oberbegriff des Patentanspruches 1 sowie ein Verfahren zur Herstellung eines solchen.

Derartige Leichtbau-Flächenelemente in Sandwichbauweise umfassen eine Kernschicht aus geschäumtem Kunstharz, Balsa-Holz oder Waben, sowie äußere Schichten, welche die Steifigkeit des Flächenelements sicherstellen. Besonders vorteilhaft ist hierbei eine Ausbildung des Leichtbau-Flächenelements mit einer Kernschicht in Wabenstruktur, wie sie beispielsweise aus der WO 89/10258 bekannt ist.

In manchen Anwendungsfällen, z. B. zur Herstellung einer Rolltür benötigt man eine hohe Elastizität bzw. Nachgiebigkeit des Flächenelements in einer Biegerichtung und gleichzeitig eine hohe Steifigkeit in der dazu senkrechten Richtung. Diese Forderung läßt sich mit dem bekannten Flächenbauelement nicht erfüllen.

Der Erfindung liegt die Aufgabe zugrunde, ein Leichtbau-Flächenelement der eingangs genannten Art dahingehend weiterzubilden, daß eine definierte Biegsamkeit in einer Richtung sichergestellt wird, die sich von der Biegsamkeit in der dazu senkrechten Richtung wesentlich unterscheidet.

Diese Aufgabe wird durch die im Kennzeichen des Patentanspruches 1 angegebenen Merkmale gelöst. Ein Verfahren zur Herstellung eines solchen Flächenbauelementes ergibt sich aus Anspruch 7.

Ein Wesentlicher Punkt der Erfindung liegt darin, daß die äußere Schicht, von welcher ausgehend die Schlitze vorgesehen sind, einerseits dem verbleibenden Kernmaterial die notwendige Steifigkeit verleiht, andererseits aber dort, wo sie jeweils die Schlitze überdeckt, gestaucht werden kann, so daß eine Krümmung des Flächenelements zu dieser Deckschicht hin erfolgen kann. Gegenüber jedoch ist die obere Schicht, also der Rest Kernmaterial zusammen mit der darauf vorgesehenen äußeren Schicht schubsteif, so daß eine bleibende glatte Oberfläche erzielbar ist, die lediglich gebogen wird.

Vorzugsweise befindet sich auf den Oberflächen der Kernschicht jeweils eine Deckschicht, die mit der Kernschicht fest verbunden ist. Dies läßt sich mit Phenol-, Epoxy- oder Thermoplast-vorimprägniertem Gewebe in vorteilhafter Weise verwirklichen.

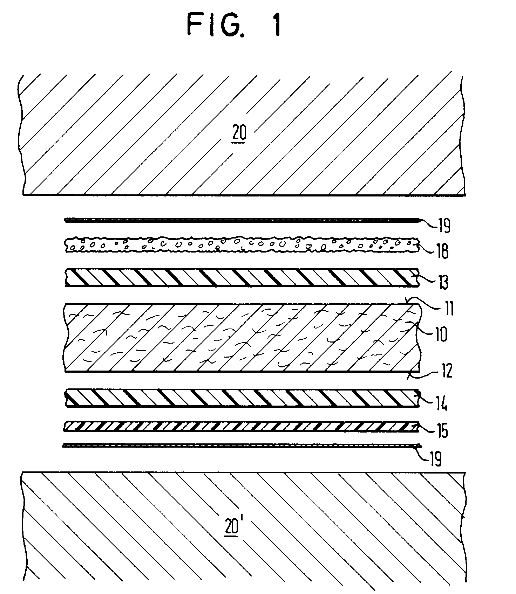

Weitere bevorzugte Ausführungsformen der Erfindung ergeben sich aus den Unteransprüchen und der nachfolgenden Beschreibung einer Ausführungsform der Erfindung, die zusammen mit ihrer Herstellung anhand der beiliegenden Abbildungen näher beschrieben wird. Hierbei zeigen
Fig. 1 - 5 verschiedene Verfahrensstadien der Herstellung einer Ausführungsform des erfindungsgemäßen Leichtbau-Flächenelements.

In der nachfolgenden Beschreibung werden für gleiche oder gleich wirkende Teile dieselben Bezugsziffern verwendet.

Bei der hier gezeigten Ausführungsform der Erfindung besteht die Kernschicht 10 aus Waben-Material (Nomex und Papier), auf dessen Oberflächen 11 und 12 eine erste und eine zweite Deckschicht 13, 14 aus vorimprägniertem Gewebe gelegt werden. Auf die erste Deckschicht 13 wird ein Abreißgewebe 18 gelegt, während unter die untere Deckschicht 15 eine erste Oberflächenschicht unter Zwischenlage von Kleber, also z. B. eine Klebefolie gelegt wird. Diese Klebefolie 15 bildet beim fertigen Bauteil die Außenfläche, wird also vorzugsweise so gestaltet (eingefärbt, strukturiert usw.), wie es der Anwender wünscht.

Das Abreißgewebe 18 und die erste Oberflächenschicht 15 werden jeweils mit einer Trennfolie 19 abgedeckt, so daß der so entstandene "Stapel" zwischen Preßflächen 20, 20' eingelegt werden kann. Beim nun folgenden Pressen unter gleichzeitiger Wärmeeinwirkung verbinden sich die Deckschichten 13 und 14 mit der darunterliegenden Kernschicht 10 und die erste Oberflächenschicht 15 mit der zweiten Deckschicht 14.

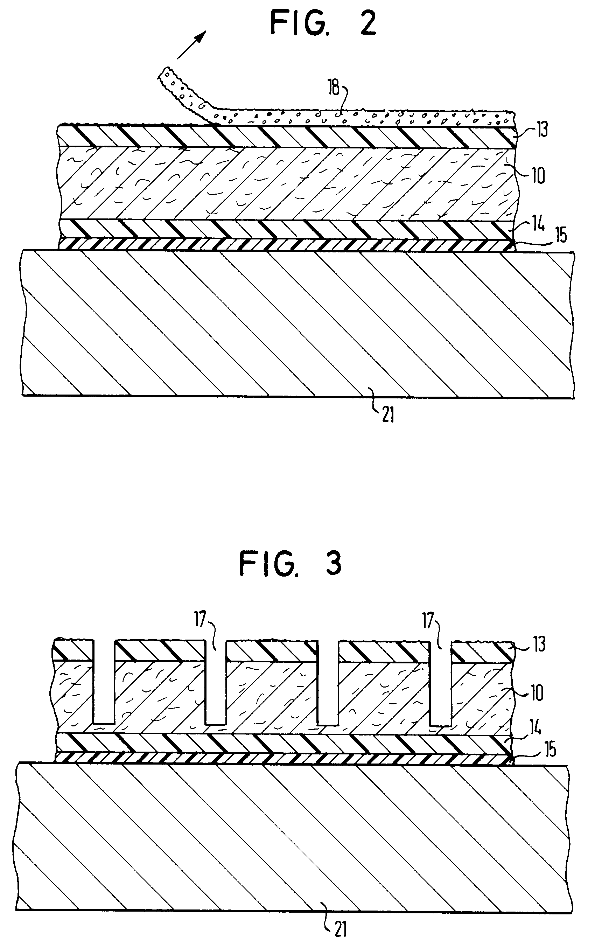

Nach dem Aushärten wird, wie in Fig. 2 gezeigt, der entstandene Schichtkörper mit der ersten Oberflächenschicht 15 nach unten auf eine Halteplatte 21 aufgebracht, die eine Handhabung des entstandenen "Rohlings" ermöglicht. Das Abreißgewebe 18 wird entfernt und läßt eine aufgerauhte Oberfläche auf der ersten Deckschicht 13 zurück.

Nun werden mittels einer Formsäge oder eines Fingerfräsers Schlitze 17 derart in den Rohling eingebracht, daß ein Rest der Kernschicht 10 stehen bleibt. Im Prinzip ist es auch möglich, die Schlitze 17 bis auf die zweite Deckschicht 14 einzubringen, jedoch muß darauf geachtet werden, daß das verbleibende Material eine hinreichende Festigkeit in Schubrichtung aufweist, andererseits aber auch (weich)elastisch biegsam ist.

Nach dem Einbringen der Schlitze 17 gemäß Fig. 3 wird der so entstandene Körper zusammen mit der Halteplatte 21 wieder zwischen die Preßflächen 20, 20' einer beheizbaren Presse gebracht. Die Halteplatte 21 wird durch eine Trennfolie 19 vor einem Festkleben an der dazugehörigen Preßfläche 20' geschützt.

Zuvor wurde auf die (aufgerauhte) Oberfläche der ersten Deckschicht 13 eine Kleberschicht 22 aufgebracht. Auf diese wird eine zweite Oberflächenschicht 16 aufgelegt, die wieder über eine Trennfolie 19 von der dazugehörigen Preßfläche 20 trennbar ist. Beim nachfolgenden Preßvorgang (unter Wärmeeinwirkung) verbindet sich die zweite Oberflächenschicht 16 mit der darunterliegenden ersten Deckschicht 13.

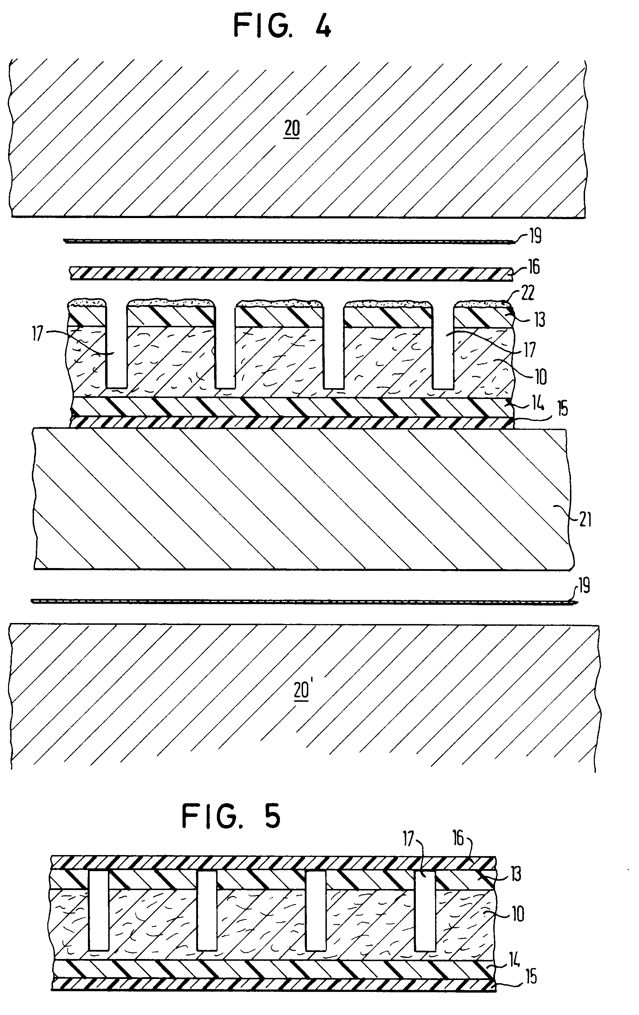

Der so entstandene Körper wird nun von der Halteplatte 21 genommen und weist den in Fig. 5 gezeigten Querschnitt auf. An dieser Stelle sei darauf hingewiesen, daß die in den Abbildungen gezeigten Abmessungen hinsichtlich der Stärken der Schichten 13 - 16 aus Gründen der besseren Darstellbarkeit stark vergrößert sind.

### Bezugszeichenliste

- 10: Kernschicht
- 11: erste Oberfläche
- 12: zweite Oberfläche
- 13: erste Deckschicht
- 14: zweite Deckschicht
- 15: erste Oberflächenschicht
- 16: zweite Oberflächenschicht
- 17: Schlitz
- 18: Abreißgewebe
- 19: Trennfolie
- 20: Preßfläche
- 21: Halteplatte
- 22: Kleber

## Patentansprüche

1. Leichtbau-Flächenelement, umfassend mindestens eine Leichtbau-Kernschicht (10), die auf beiden Oberflächen (11, 12) mit einer dünneren äußeren Schicht (15, 16) verbunden ist,
**gekennzeichnet durch**
eine Vielzahl von zueinander parallelen Schlitzen (17) definierter Breite, welche ausgehend von einer intakten äußeren Schicht (16) die Kernschicht (10) zu einem wesentlichen Teil ihrer Dicke durchqueren.

2. Leichtbau-Flächenelement nach Anspruch 1,
**dadurch gekennzeichnet**, daß die Kernschicht (10) in Wabenbauweise mit zu den Oberflächen (11, 12) senkrecht stehenden Waben ausgebildet ist.

3. Leichtbau-Flächenelement nach Anspruch 2,
**dadurch gekennzeichnet,** daß die Kernschicht (10) aus Nomex und Papier gefertigt ist.

4. Leichtbau-Flächenelement nach einem der vorhergehenden Ansprüche,
**dadurch gekennzeichnet,** daß auf beiden Oberflächen (11, 12) der Kernschicht (10) Deckschichten (13, 14) aus vorimprägniertem Material, vorzugsweise Gewebe, angebracht sind.

5. Leichtbau-Flächenelement nach einem der vorhergehenden Ansprüche,
**dadurch gekennzeichnet,** daß die Tiefe der Schlitze 80 - 95 % der Dicke der Kernschicht (10) beträgt.

6. Leichtbau-Flächenelement nach einem der vorhergehenden Ansprüche,
**dadurch gekennzeichnet,** daß die Schlitze (17) gleiche Abstände voneinander aufweisen.

7. Verfahren zur Herstellung eines Leichtbau-Flächenelements, umfassend mindestens eine Leichtbau-Kernschicht (10), die auf beiden Oberflächen (11, 12) mit einer dünneren äußeren Schicht (15, 16) verbunden ist,
**gekennzeichnet** durch folgende Schritte:
a) beidseitige Beschichtung der Kernschicht (10) mit einer ersten Deckschicht (13) und einer zweiten Deckschicht (14);
b) Anbringen einer Vielzahl von Schlitzen (17) definierter Breite, welche die erste Deckschicht (13) vollständig und die Kernschicht (10) zu einem wesentlichen Teil ihrer Dicke durchqueren;
c) Beschichten des Leichtbauelements mindestens auf der Seite der ersten Deckschicht (13) mit einer ersten Oberflächenschicht (16).

8. Verfahren nach Anspruch 7,
**dadurch gekennzeichnet,** daß in einem weiteren Schritt d) auf die zweite Deckschicht (14) eine zweite Oberflächenschicht (15) aufgebracht wird.

9. Verfahren nach einem der Ansprüche 7 oder 8, wobei die erste und die zweite Deckschicht (13, 14) vorimprägnierte Werkstoffe umfassen,
**dadurch gekennzeichnet,** daß die Deckschichten (13, 14) mit der Kernschicht (10) in einer Presse (20, 22') unter Wärmeeinwirkung verbunden werden.

10. Verfahren nach einem der Ansprüche 7 bis 9,
**dadurch gekennzeichnet,** daß die Oberflächenschicht(en) (15, 16) über Kleber (22) mit der darunterliegenden Deckschicht (13, 14) verbunden werden.

11. Verfahren nach einem der Ansprüche 7 bis 10,
**dadurch gekennzeichnet,** daß im Schritt b) die Schlitze (16) mittels spanabhebender Verformung, insbesondere durch Sägen oder Fräsen gebildet werden.

12. Verfahren nach Anspruch 7,
**dadurch gekennzeichnet,** daß beim Schritt a) auf der ersten Deckschicht (13) ein Abreißgewebe (18) angebracht wird, das vor dem Schritt c) unter Zurücklassen einer beklebbaren Oberfläche der ersten Deckschicht (13) entfernt wird.

13. Verfahren nach Anspruch 7,
**dadurch gekennzeichnet,** daß der nach dem Schritt a) entstandene Rohling während der darauffolgenden Schritte b) - d) auf einer zerstörungsfrei handhabbaren Halteplatte (21) fixiert wird.

14. Verfahren nach Anspruch 8,
**dadurch gekennzeichnet,** daß die Schritte a) und d) gleichzeitig durchgeführt werden.
